# EUROPEAN PATENT SPECIFICATION

(11) **EP 2 578 122 B1**
(45) Date of publication and mention of the grant of the patent: **16.04.2014**
(21) Application number: 11184219.1
(22) Date of filing: 06.10.2011
(51) Int. Cl.: A47J 37/06

(54) **Toasting apparatus having improved hot chamber isolation with passive ventilation**
Röstvorrichtung mit verbesserter Warmkammerisolation mit Passivbelüftung
Appareil de grill doté d'une isolation de chambre chaude avec ventilation passive

(43) Date of publication of application: 10.04.2013
(73) Proprietor: Eksen Makine Sanayi ve Ticaret A.S., 41480 Kocaeli (TR)
(72) Inventor: Tahincioglu, Besim, 41480 Kocaeli (TR); Tuzcu, Oytun, 41480 Kocaeli (TR)
(74) Representative: Sevinç, Erkan

(56) References cited:
- EP-A1- 1 864 599
- DE-A1- 4 338 471
- FR-A1- 2 956 573
- US-B1- 6 257 126

## Description

### Technical Field of the Invention

The present invention relates to an electrical household appliance and more particularly to a toaster having plates to brown a food article and particularly slices of bread by exposure to heat.

### Background of the Invention

Toasters are widely used all over the world. A toaster of the present type generally has a pair of hinged grilling plates receiving food article between them. The upper grilling plate being rotatable with respect to the lower grilling plate, when closed, defines a heating chamber for grilling a food article, for instance slices of bread.

A common problem with the grilling appliances of the present type is that users generally need to pay attention to the fact that the apparatus' outer surfaces may become substantially hot in a matter of minutes and one should not touch the outer surface of the body inadvertently.

The present invention on the other hand, distinguishes from the prior art in that separated hot and cold zones are provided within the toasting apparatus to prevent accidents when a user inadvertently touches the outer surface of the apparatus body.

To that end, the present invention provides a passive ventilation system discharging accumulated heat through convenient openings before heating plates with which users can directly get in contact, becomes heated. Elimination of burning hazards is therefore ensured to a substantial degree especially in cases where children or elder people with or without low vision condition are left alone to operate the toasting apparatus.

Passive ventilation typically involves convective fluid channels to enable cooling of the apparatus without making use of separate heat discharge means involving energy consumption. The present invention therefore addresses a quite simple and very known yet untouched problem in a simple but efficient way.

Excessive heating of the grilling plates are especially in question in cases where both plates hinged to each other are opened 180 degrees apart in a manner to form a generally planar grilling surface while the toasting apparatus is disposed on a flat surface such as a kitchen counter or table. In this case as there is excessive heat loss to the ambient air due to the grilling surface being formed by a single-side heat source instead of a double-side closed heat chamber formed by lower and upper grill plates, effective active power dissipated by the electrical resistances associated by said grilling pates must be elevated to compensate heat losses, therefore resulting iin considerably hotter outer surfaces posing a burn injury threat to users and a fire risk in the kitchen.

To that end, the apparatus of the present invention is advantageous in that using the same in horizontally disposed open position is more secure in terms of elevated nominal temperature values on the grilling plates' outer surfaces.

A prior art publication citable in the field of the present invention may be referred to as FR2956573, disclosing a body with a sidewall perpendicular to a base wall and a cooking plate arranged at the level of an opening of the body. An electric resistance heater is arranged under the plate, and a heat reflection device is arranged in the body under the heater. The body includes airing orifices formed through vertical slits

### Objects of the Invention

Primary object of the present invention is to provide an electrical toaster in which hot and cold zones are provided to prevent excessive heating of the outer surface of the apparatus body.

Another object of the present invention is to provide an electrical toaster in which burning hazards are prevented when a user inadvertently touches the outer surface of the apparatus body.

Another object of the present invention is to provide an electrical toaster in which a passive ventilation system discharging accumulated heat through convenient openings before heating plates with which users can directly get in contact becomes heated is provided.

Another object of the present invention is to provide an electrical toaster use of which is more secure in horizontally disposed open position in terms of elevated nominal temperature values on the grilling plates' outer surfaces.

### Summary of the Invention

The present invention proposes a domestic appliance and specifically an electrical toaster having a pair of heating plates in thermal communication with heat sources accommodated to transfer heat to said plates. Grilling plates are typically positioned in the manner that a lower plate lies horizontally in a stationary manner and an upper plate is hinged to be rotatable relative to said lower plate to be closed upon the same in order for forming a grilling chamber enclosing a food article from below and above. An electrical toaster in which a passive ventilation system discharging accumulated heat through convenient openings before heating plates with which users can directly get in contact becomes heated is provided.

### Brief Description of the Figures

The figures whose brief explanation is herewith provided is solely intended for providing a better understanding of the present invention and is as such not intended to define the scope of protection or the context in which said scope is interpreted in the absence of the description.

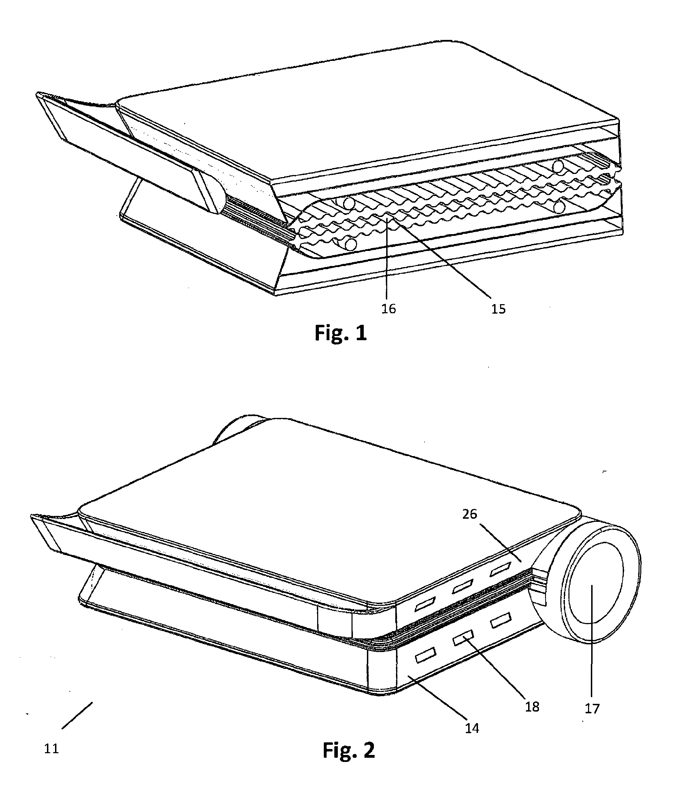

Fig. 1 demonstrates a general perspective view of the toasting apparatus according to the present invention where the grilling plates are shown laterally.
Fig. 2 demonstrates a general perspective view of the toasting apparatus according to the present invention.

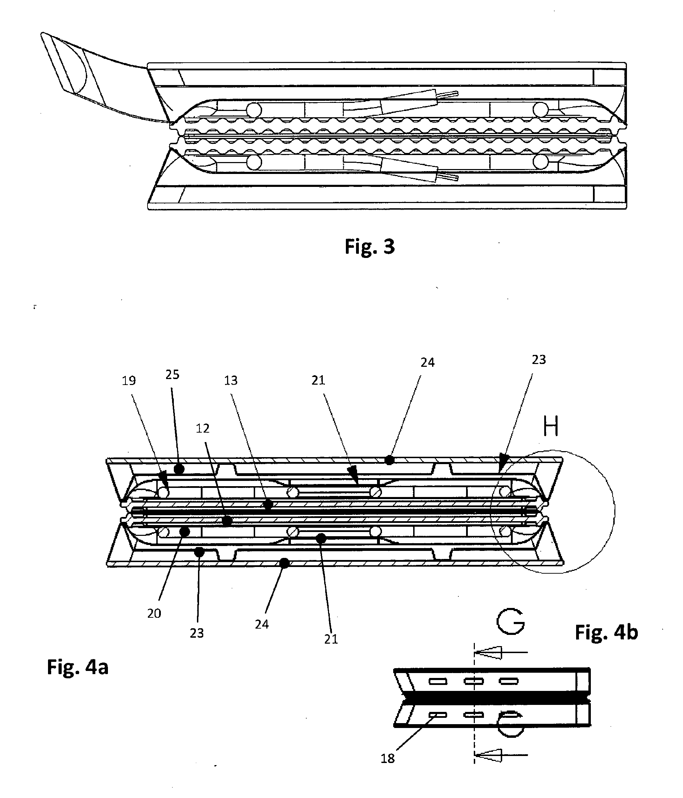

Fig. 3 demonstrates a side view of the toasting apparatus according to the present invention where the grilling plates are shown.

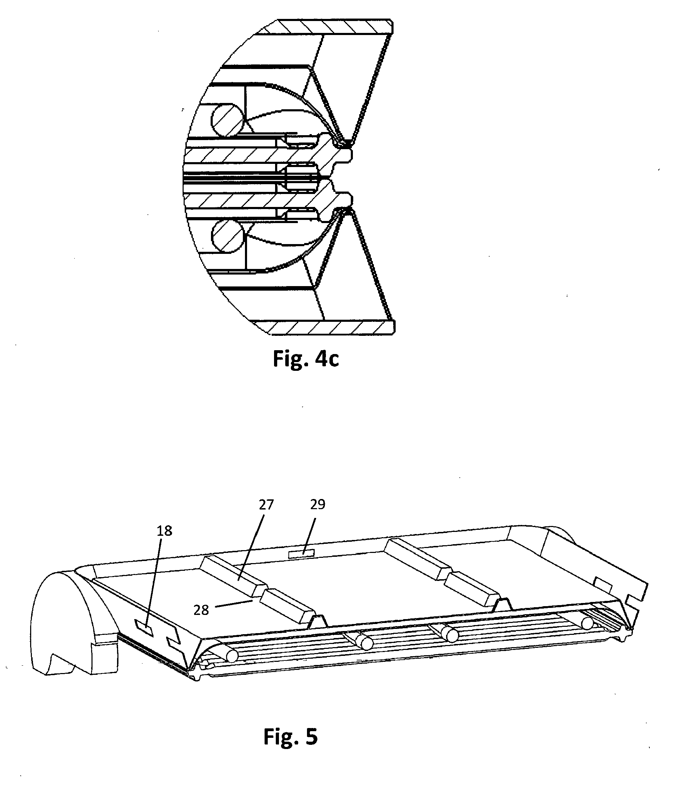

Fig. 4a demonstrates the G-G cross-section of the toasting apparatus according to the present invention as indicated in Fig 4b. Fig 4c demonstrates the H detail as indicated in Fig. 4a.
Fig. 5 demonstrates a perspective view of the upper grilling part of the toasting apparatus according to the present invention.

### Detailed Description of the Invention

Referring now to the figures outlined above, the present invention proposes an electrical household appliance (11) and namely a toasting apparatus. The apparatus typically features a lower plate (12) stationary on a base part (14), the latter housing control electronics and driving mechanisms as will be explained hereinafter.

The upper grilling plate (13) in a movable part (26) according to the present invention is typically hinged by a hinge mechanism (17) to the lower grilling plate (12) in a manner to be rotatable relative to said lower plate (12). The upper grilling plate (13) is therefore adapted to be closed upon sad lower grilling (12) plate in a closed grilling position so as to provide a grilling chamber in which a food article being in contact with said plates (12, 13) from above and below.

The grilling plates (12, 13) are typically designed in the form to have parallel protrusions (15) forming circular cross-section channels (16) extending between lateral edges of the apparatus (11) in closed position.

A control panel (typically provides users with different grilling options for instance to allow a longer grilling period. A user therefore setting a timer to a specified duration of grilling time of preference will energize heat sources being electric resistances of conventional tubular type. Those are provided within the upper and lower plate housings (respectively 19, 20). Upon completion of specified duration of time, powering of resistances (19, 20) will discontinue as set by the user.

The present invention provides an improved hot grilling chamber construction as explained below. A radiant element (21) in the form of a heat barrier, typically reflects back convective heat energy to the grilling plates (12, 13) and hence to the grilling chamber. Said radiant elements (21) are disposed in between each of said grilling plates (12, 13) and a generally planar intermediate body (23) in association with respective upper and lower grilling portions. Further an outermost planar part, in the form of a cover (24) is disposed. It is to be noted that said planar intermediate body (23) can be made out of metal sheet or Bakelite, a well-known trademark of a material known to the person skilled in the art. Further, said outermost covers (24) can be made out of metal sheet or glass.

The present invention further features ventilation openings (18) laterally disposed on the side edges of said base part (14) and said movable part (26). Said ventilation openings (18) are in communication with cold zones (25) in between said planar intermediate bodies (23) and said covers (24) in each of base part (14) and said movable part (26). To this end, heat energy present in the vicinity of said electrical resistances (19, 20) in the direction of said radiant elements (21) in each part (14, 26) is first reflected back to the grilling plates (12, 13) and a further portion of the heat energy is discharged through said ventilation openings (18) being in fluid communication with said cold zones (25).

The core approach underlying the invention, that is, provision of separate temperature zones along with passive ventilation channels may be accomplished for instance by means of various divisions incorporating said hot and cold zone and various passive cooling lines on said apparatus body.

In a nutshell, the present invention proposes an electrical toasting apparatus (11) comprising a horizontally lying stationary lower grilling plate (12) in a base part (14) and an upper grilling plate (13) in a movable part. Said upper grilling plate (13) is hingedly mounted on said lower plate (12) in the manner to be closed upon said lower plate (12) to form a grilling chamber between said plates (12, 13). Said base part (14) and said movable part (26) comprise electrical resistances (19, 20) in thermal communication with said upper (13) and lower (12) grilling plates.

Said toasting apparatus (11) comprises radiant elements (21) respectively in association with said lower and upper grilling plates (12, 13) to be extending parallel to said grilling plates (12, 13) to cover the entire surfaces thereof in the manner to accommodate said electrical resistances (19, 20) thereinbetween. Said radiant elements (21) are disposed in between each of said grilling plates (12, 13) and planar intermediate bodies (23) in association with respective upper and lower grilling portions.

The planar intermediate body (23) according to the invention comprises elevated channels (27) extending perpendicular to the hinge mechanism (17) axis. Said elevated channels (27) also support said cover elements (24) in a non-spaced manner. Said elevated channels (27) are further provided with fluid passages (28) to allow fluid communication in the direction of side openings (18) within said cool zone (25).

Said cool zone (25) further comprises rear windows (29) extending parallel to the axis of said hinge mechanism (17).

## Claims

1. An electrical toasting apparatus (11) comprising a horizontally lying stationary lower grilling plate (12) in a base part (14), an upper grilling plate (13) in a movable part (26) hingedly mounted on said lower plate (12) in the manner to be closed upon said lower plate (12) to form a grilling chamber between said plates (12, 13), electrical resistances (19, 20) in thermal communication with said upper (13) and lower (12) grilling plates, said toasting apparatus (11) further comprising radiant elements (21) respectively in association with said lower and upper grilling plates (12, 13) to be extending parallel to said grilling plates (12, 13) to cover the entire surfaces thereof in the manner to accommodate said electrical resistances (19, 20) thereinbetween, said radiant elements (21) being disposed in between each of said grilling plates (12, 13) and planar intermediate bodies (23) respectively in association with said base part (14) and said movable part (26) **characterized in that**;
said planar intermediate body (23) is made out of either metal sheet or Bakelite and,
said planar intermediate bodies (23) comprises elevated channels (27) extending perpendicular to the axis of said hinge mechanism (17).

2. An electrical toasting apparatus (11) as in Claim 1 wherein said planar intermediate bodies (23) between said radiant elements (21) and cover elements (24) respectively in association with said base part (14) and said movable part (26) define a closed fluid zone (25).

3. An electrical toasting apparatus (11) as in Claim 2 wherein said closed fluid zones (25) are in fluid communication with ventilation openings (18) laterally disposed on the side edges of said base part (14) and said movable part (26) extending perpendicular to the hinge mechanism (17) axis.

4. An electrical toasting apparatus (11) as in Claim 1 wherein said upper (13) and lower (12) grilling plates comprise parallel protrusions (15) forming circular cross-section channels (16) extending between lateral edges of said toasting apparatus (11) in closed position whereby a grilling attachment (21) is suitable to be placed along said circular cross-section channels (16) of the upper (13) and lower (12) grilling plates.

5. An electrical toasting apparatus (11) as set forth in any previous Claims wherein said covers (24) are made out of either metal sheet or glass material.

6. An electrical toasting apparatus (11) as set forth in Claim 1 wherein said elevated channels (27) are provided with fluid passages (28) to allow fluid communication in the direction of side openings (18) within said closed fluid zone (25).

7. An electrical toasting apparatus (11) as set forth in Claim 6 wherein said closed fluid zone (25) comprises at least one rear window (29) extending parallel to the axis of said hinge mechanism (17).

## Patentansprüche

1. Elektrisches Toastgerät (11) mit einer horizontal liegenden stationären unteren Grillplatte (12) in einem Sockelteil (14), einer oberen Grillplatte (13) in einem beweglichen Teil (26), das schwenkbar auf der unteren Platte (12) auf eine Weise angebracht ist, um auf der unteren Platte (12) zum Bilden einer Grillkammer zwischen den Platten (12, 13) geschlossen zu werden, elektrischen Widerständen (19, 20) in thermischer Verbindung mit den oberen (13) und unteren (12) Grillplatten, wobei das Toastgerät (11) ferner Strahlungselemente (21) aufweist, die jeweils mit den unteren und oberen Grillplatten (12, 13) verbunden sind, um sich parallel zu den Grillplatten (12, 13) zu erstrecken, um deren gesamte Oberflächen auf eine Weise zu bedecken, um die elektrischen Widerstände (19, 20) dazwischen unterzubringen, und die Strahlungselemente (21) zwischen jeder der Grillplatten (12, 13) und ebenen Zwischenkörpern (23), die mit dem Sockelteil (14) und dem beweglichen Teil (26) verbunden sind, angeordnet sind,
**dadurch gekennzeichnet,**
**dass** der ebene Zwischenkörper (23) entweder aus Blech oder aus Bakelit gefertigt ist, und
die ebenen Zwischenkörper (23) erhöhte Kanäle (27) aufweisen, die sich senkrecht zu der Achse des Schwenkmechanismus (17) erstrecken.

2. Elektrisches Toastgerät (11) nach Anspruch 1,
wobei die ebenen Zwischenkörper (23) zwischen den Strahlungselementen (21) und Abdeckelementen (24) jeweils in Verbindung mit dem Sockelteil (14) und dem beweglichen Teil (26) einen geschlossenen Fluidbereich (25) definieren.

3. Elektrisches Toastgerät (11) nach Anspruch 2,
wobei die geschlossenen Fluidbereiche (25) in fluider Verbindung mit Lüftungsöffnungen (18) sind, die seitlich auf den Seitenkanten des Sockelteils (14) und des beweglichen Teils (26) angeordnet sind, und sich senkrecht zu der Schwenkmechanismus-(17)-Achse erstrecken.

4. Elektrisches Toastgerät (11) nach Anspruch 1,
wobei die oberen (13) und unteren (12) Grillplatten parallele Vorsprünge (15) aufweisen, die Kanäle (16) mit kreisförmigem Querschnitt bilden, die sich zwischen seitlichen Kanten des Toastgeräts (11) in geschlossener Position erstrecken, wodurch ein Grillaufsatz (21) geeignet ist entlang den Kanälen (16) kreisförmigen Querschnitts der oberen (13) und unteren (12) Grillplatten angeordnet zu werden.

5. Elektrisches Toastgerät (11) nach einem vorhergehenden Anspruch,
wobei die Abdeckungen (24) entweder aus Blech oder Glasmaterial gefertigt sind.

6. Elektrisches Toastgerät (11) nach Anspruch 1,
wobei die erhöhten Kanäle (27) mit Fluiddurchgängen (28) versehen sind, um eine Fluidverbindung in der Richtung der Seitenöffnungen (18) innerhalb des geschlossenen Fluidbereichs (25) zu erlauben.

7. Elektrisches Toastgerät (11) nach Anspruch 6,
wobei der geschlossene Fluidbereich (25) zumindest ein hinteres Fenster (29) aufweist, das sich parallel zu der Achse des Schwenkmechanismus (17) erstreckt.

## Revendications

1. Un grille-pain électrique (11) comprenant une plaque de grillage inférieure horizontale stationnaire (12) dans une partie de base (14), une plaque supérieure de grillage (13) dans une partie mobile (26) articulée sur ladite plaque inférieure (12) de manière à être fermée sur ladite plaque inférieure (12) pour former une chambre de grillage entre lesdites plaques (12, 13), des résistances électriques (19, 20) en communication thermique avec lesdites plaques de grillage supérieure (13) et inférieure (12), ledit grille-pain (11) comprenant en plus des éléments radiants (21) respectivement en association avec lesdites plaques de grillage inférieure et supérieure (12, 13) pour s'étendre parallèlement auxdites plaques de grillage (12, 13) pour couvrir leurs surfaces entières de manière loger lesdites résistances électriques (19, 20) entre elles, lesdits éléments radiants (21) étant disposés entre chacune desdites plaques de grillage (12, 13) et des corps intermédiaires plans (23) respectivement en association avec ladite partie de base (14) et ladite partie mobile (26), **caractérisé en ce que** :
ledit corps intermédiaire plan (23) est constitué soit d'une feuille de métal soit de bakelite
et,
ledit corps intermédiaire plan (23) comprend des canaux surélevés (27) s'étendant perpendiculairement à l'axe dudit mécanisme d'articulation (17).

2. Un grille-pain électrique (11) selon la revendication 1, dans lequel lesdits corps intermédiaires plans entre lesdits éléments radiants (21) et des éléments couvrants (24) respectivement en association avec ladite partie de base (14) et ladite partie mobile (26) forment une zone fluide fermée (25).

3. Un grille-pain électrique (11) selon la revendication 2, dans lequel lesdites zones fluides fermées (25) sont en communication fluidique avec des ouvertures de ventilation (18) disposées latéralement sur les bords latéraux de ladite partie de base (14) et de ladite partie mobile (26) s'étendant perpendiculairement à l'axe du mécanisme d'articulation (17).

4. Un grille-pain électrique (11) selon la revendication 1, dans lequel lesdites plaques de grillage supérieure (13) et inférieure (12) comprennent des élévations parallèles (15) formant des canaux de section transversale circulaire (16) s'étirant entre des bords latéraux dudit grille-pain (11) en position fermée, un accessoire de grillage étant apte à être placé le long desdits canaux de section transversale circulaire (16) des plaques de grillage supérieure (13) et inférieure (12).

5. Un grille-pain électrique (11) tel qu'exposé dans l'une ou l'autre des revendications précédentes, dans lequel lesdits couvercles (24) sont faits d'une feuille de métal ou de matériau en verre.

6. Un grille-pain électrique (11) tel qu'exposé dans la revendication 1, dans lequel lesdits canaux surélevés (27) sont équipés de passages de fluides (28) pour permettre une communication des fluides dans la direction des ouvertures latérales (18) à l'intérieur de ladite zone de fluide fermée (25).

7. Un grille-pain électrique (11) tel qu'exposé dans la revendication 6, dans lequel ladite zone de fluides fermée (25) comprend au moins une fenêtre arrière (29) s'étendant parallèlement à l'axe dudit mécanisme d'articulation (17).
